# EUROPEAN PATENT APPLICATION

(11) **EP 2 023 120 A1**
(43) Date of publication of application: **11.02.2009**
(21) Application number: 08161679.9
(22) Date of filing: 01.08.2008
(51) Int. Cl.: G01N 17/04, G01N 29/02, G01N 27/02

(54) **Wireless corrosion sensor**

(30) Priority: 06.08.2007 US 834255
(71) Applicant: Honeywell International Inc., Morristown, NJ 07962 (US)
(72) Inventor: Gordon, Grant A., Peoria, AZ 85383 (US)
(74) Representative: Buckley, Guy Julian

(57) **Abstract**

A wireless corrosion detector includes a surface acoustic wave (SAW) sensor tag. The SAW sensor tag has an output port. At least one electro-resistive (ER) corrosion sensor is coupled to the output port.

## Description

### TECHNICAL FIELD

The present invention relates to sensors, and more specifically, to the wireless detection and monitoring of corrosion.

### BACKGROUND

Corrosion is a serious concern for such surfaces as aerospace structures. Despite the tendency toward composite vehicles, there are still many metal-to-metal and metal-to-composite interfaces in legacy and next-generation air transportation vehicles. Large air transport customers have expressed a need for a simple, light weight, inexpensive corrosion sensors that can detect corrosion at these interfaces. Their objective is to detect corrosion with a low cost inspection protocol that can detect corrosion damage before the damage becomes extensive. Often they find damage when the cost of mitigation is expensive. This expense could have been averted if the damage had been detected sooner.

Unfortunately the corrosion can take place in hard to reach places making traditional manual nondestructive inspections time consuming and difficult. An alternative is to design a sensor that can be installed during, or after vehicle fabrication, that could be used to monitor the interface condition at the location of fastener, between interface regions of structural layers and other corrosion initiation sites. Battery-less, wireless operation would make any potential sensor very attractive for use in difficult to access locations.

### BRIEF SUMMARY

In one embodiment, and by way of example only, a wireless corrosion detector includes a surface acoustic wave (SAW) sensor tag consisting primarily of a SAW filter, an antenna connected to the input port and at least one electro-resistive (ER) sensor coupled to the output port.

In another embodiment, again by way of example only, a wireless corrosion system includes a processor. A transceiver device is coupled to the processor. A corrosion detector includes at least one electro-resistive (ER) sensor coupled to an output port of a surface acoustic wave (SAW) sensor tag. The SAW sensor tag is interrogated by a radio frequency (RF) signal generated by the transceiver. The SAW sensor tag rebroadcasts a response RF signal incorporating amplitude variation and delay. The response RF signal is received by the transceiver and interpreted by the processor as corrosive activity.

In an additional embodiment, again by way of example only, a method of detecting corrosion includes fixing a corrosion detector to a surface subject to corrosion. The corrosion detector includes at least one electro-resistive (ER) sensor coupled to an output port of a surface acoustic wave (SAW) sensor tag. The corrosion detector is interrogated with a radio frequency signal (RF). A response RF signal incorporating amplitude variation and delay is received. The amplitude variation and delay incorporated in the response RF signal is interpreted as a measure of the corrosion activity that has taken place and been witnessed by the sensor in the vicinity of the sensor.

### BRIEF DESCRIPTION OF THE DRAWINGS

FIG. 1 illustrates an exemplary wireless corrosion detector;

FIG. 2 illustrates a block diagram of an exemplary corrosion detection system; and

FIG. 3 illustrates a wireless corrosion detector integrated between layers of material subject to corrosion.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

The claimed subject matter exploits two emerging technologies, which when combined provide an inexpensive, battery-less and wireless sensor for detecting the presence of corrosion in difficult to reach places. Electro-resistive (ER) sensors may be used for corrosion monitoring in powered and wired configurations. Such ER sensors can include smart washers for helicopter gearbox fasteners and atmosphere-exposed ER sensors that witness the environmental loading experienced by a vehicle. A surface acoustic wave (SAW)-based sensor tag consists of a SAW filter with an antenna at input port and an impedance varying sensor at its output port. Variations in the filter's acoustic impedance lead to variations in reflectance for a received interrogating RF wave.

In an implementation where ER sensors are combined with such a SAW sensor tag, the reflectance of the acoustic wave by the SAW filter and the re-emitted RF signal is in proportion to the impedance of the respective ER sensor tied to SAW filter output port. By combining such ER sensors with SAW tags, the impedance of the corrosion monitoring sensor may be measured without battery power or wired connections. Appropriate packaging may allow this sensor solution to monitor corrosion at layered interfaces, fasteners or as environmental witnesses.

Such an implementation may be made by combining one or several electro-resistive sensors at the output port of a SAW based sensor tag. A variety of form factors can be envisioned for the electro-resistive (ER) sensor. To monitor corrosion at the interface between multiple metal layers or a metal-composite interface the electro-resistive sensor could be fabricated from, or connected to, the SAW 'transceiver' tag using a multilayer flex circuit design. Such a thin 'smart washer' could be installed during assembly and buried between layers of a structure subject to corrosion, with the SAW sensor tag emerging at the faying edge of a lap splice or similar joining structure.

A single SAW sensor tag could be wired to a set of ER sensors in various combinations of parallel and series topologies. Each SAW sensor tag connected to multiple ER sensors would be capable of monitoring a region of the structure for corrosion. The degree of corrosion detection location specificity could be adjusted by varying the number of ER sensors served by a SAW tag or by using a more sophisticated SAW tag design that is capable of differentiating between output port sensors based on added communication complexities.

After installation, the presence of corrosion is sensed through changes in resistance of the ER sensor in contact with an uncorroded, or relatively uncorroded, portion of the structure being monitored. The ER sensor's electrical resistance changes due to the presence of corrosion products or due to the breakdown in a sacrificial protective coating due to corrosion activity.

The SAW filter is a bandpass, frequency selective device that converts electrical energy into acoustic energy. When the SAW filter is interrogated by an appropriate RF signal the RF energy is converted into an elastic wave that travels down the SAW filter experiencing a transit time delay. When the converted ultrasonic signal reaches the end of the SAW delay line it is reflected by the output port load and it travels back up the delay line to be re-transmitted by the antenna connected to the input port of the SAW tag. Variations in the ER sensor impedance can be seen as amplitude variations and delay in the rebroadcast RF signals. Reference RF reflection using dummy loads within the same SAW - ER sensor package could be used to calibrate the amplitude response removing common shared sources for signal amplitude variation.

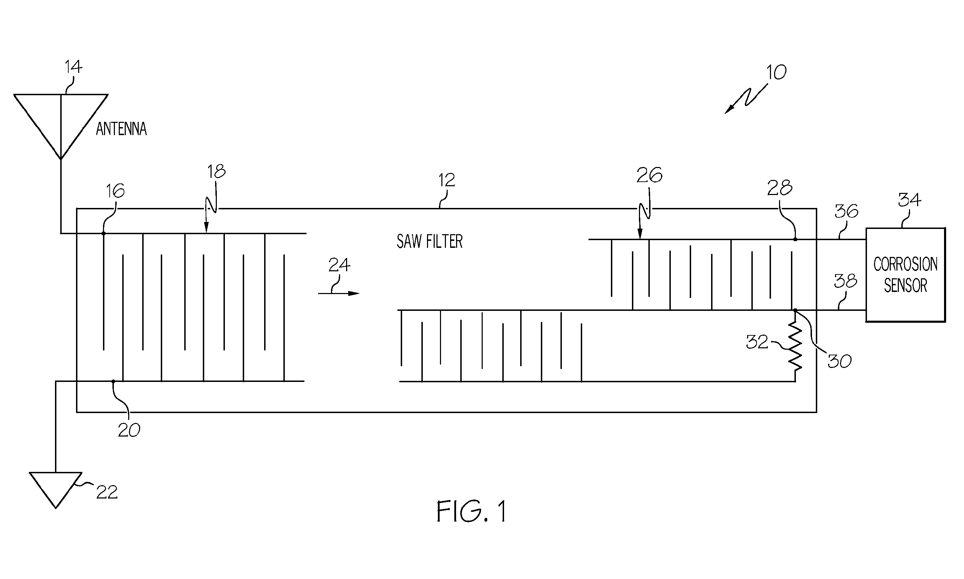

Turning to FIG. 1, an exemplary corrosion detector 10 is illustrated. Detector 10 includes a SAW-based sensor tag 12, having an antenna 14 and a ground 22 connection made to the input port through conductors 16 and 20 respectively. An input interdigital transducer (IDT) structure 18 also connected to conductors 16 and 20. The RF electrical signal is converted to an elastic wave by structure 18 and the elastic wave travels down the SAW filter. This is denoted by arrow 24. The converse conversion of the elastic wave into an electrical signal takes place at the output port when the elastic wave packet reaches the output interdigital transducer structure 26. The output IDT is coupled to an ER sensor 34 via conductors 36 and 38 coupled to output port points 28 and 30. A resistive load 32 is shown coupled to output port at point 30.

Again, as previously described, as the elastic wave reaches the end of the output IDT 26, it is reflected by the output port load (including the sensor 34), and travels back along the SAW filter 12 to the antenna 14 where it is re-transmitted. Variations in the ER sensor 34 impedance can be seen as amplitude variations and delay in the rebroadcast RF signals.

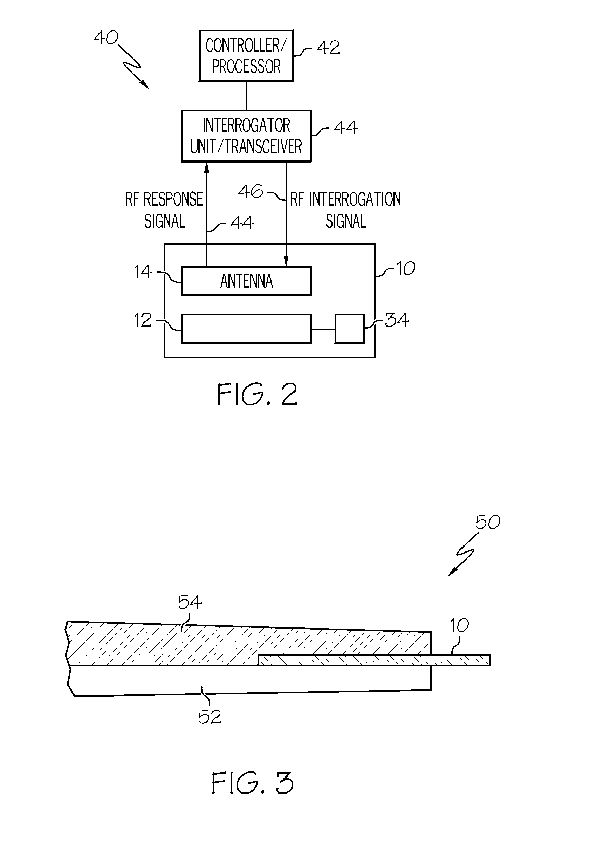

Turning to FIG. 2, an exemplary corrosion detection system is illustrated. System 40 includes a controller/processor 42 which is coupled to an interrogator unit 44 having a transceiver device. The transceiver device broadcasts an appropriate RF interrogation signal 46 which is received by the antenna 14 in corrosion detector 10. Here, as previously described, the RF signal 46 is converted into acoustical energy which travels the length of the SAW sensor 12, incorporating amplitude variation and delay reflecting an impedance of the corrosion sensor 34. The energy is then reconverted into an RF response signal 48 which is broadcast from the antenna 14 to the interrogator unit 44.

Variations in the amplitude and delay can be interpreted by the controller/processor as evidence that corrosion has taken place in the vicinity of the sensor. Again, for example, reference RF reflections using dummy loads within the same SAW - ER sensor package but experiencing different time delays that the ER sensor responses, could be used to calibrate the amplitude response removing common shared sources for signal amplitude variation.

A set of ER corrosion sensors 34 can be coupled in series (not shown), and then coupled in parallel with a SAW sensor 12. In this scenario, ER sensors 34 can be selectively placed in a desired region to be monitored. In addition, various ER sensors 34 can be placed in various layers of material, where a flex circuit element (not shown) connects the ER sensors 34 to each other, or to the SAW sensor 12. As one skilled in the art will appreciate, a number of configurations of ER sensors 34, in several form factors, can be implemented to suit a particular application.

FIG. 3 illustrates an exemplary positioning 50 of a corrosion detector between layers 52, and 54 of materials subject to corrosion. In the depicted example, A corrosion detector 10 (including a SAW sensor 12 and at least one corrosion sensor 34) is disposed within the layers 52 and 54. In the depicted embodiment, a portion of the detector 10 remains exposed to receive and convert an appropriate RF signal. For example, the exposed portion can include the SAW sensor tag 12, while the buried portion can include one or more corrosion sensors 34. Again, one skilled in the art will appreciate that a variety of configurations can be realized to form an effective corrosion monitoring system.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention.

## Claims

1. A wireless corrosion detector (10), comprising:
a surface acoustic wave (SAW) sensor tag (12) having an output port (28, 30); and
at least one electro-resistive (ER) sensor (34) coupled to the output port (28, 30).

2. The device of claim 1, wherein the SAW sensor tag (12) and ER sensor (34) are integrated between layers of material subject to corrosion.

3. The device of claim 2, wherein an exposed portion of the SAW sensor tag (12) extends from the layers of material.

4. The device of claim 1, further including an additional ER sensor coupled in series with the at least one ER sensor (34).

5. A wireless corrosion system (40), comprising:
a processor (42);
a transceiver device (44) coupled to the processor; and
a corrosion detector (10) including at least one electro-resistive (ER) sensor (34) coupled to an output port (28, 30) of a surface acoustic wave (SAW) sensor tag (12), wherein:
the SAW sensor tag (12) is interrogated by a radio frequency (RF) signal generated by the transceiver (44),
the SAW sensor tag (12) rebroadcasts a response RF signal incorporating amplitude variation and delay, and
the response RF signal is received by the transceiver (44) and interpreted by the processor (42) as corrosive activity.

6. The system of claim 5, wherein the SAW sensor tag (12) and ER sensor (34) are integrated between layers of material subject to corrosion.

7. The device of claim 6, wherein an exposed portion of the SAW sensor tag (12) extends from the layers of material.

8. A method of detecting corrosion, comprising:
fixing a corrosion detector (10) to a surface subject to corrosion, wherein the corrosion detector includes at least one electro-resistive (ER) sensor (34) coupled to an output port (28, 30) of a surface acoustic wave (SAW) sensor tag (12);
interrogating the corrosion detector (10) with a radio frequency signal (RF);
receiving a response RF signal incorporating amplitude variation and delay;
interpreting the amplitude variation and delay incorporated in the response RF signal as corrosive activity.

9. The method of claim 15, wherein fixing the corrosion detector further includes positioning the corrosion detector (10) between layers of material subject to corrosion.

10. The method of claim 16, wherein positioning the corrosion detector (10) between layers of material further includes positioning an exposed portion of the corrosion detector to extend from the layers of material.
